**Europäisches Patentamt**

**European Patent Office**

**Office européen des brevets**

(19)

(11) Publication number : **0 348 835 B1**

## (12) EUROPEAN PATENT SPECIFICATION

(45) Date of publication of patent specification :
**02.09.92 Bulletin 92/36**

(51) Int. Cl.⁵ : **B64D 10/00**

(21) Application number : **89111449.8**

(22) Date of filing : **23.06.89**

---

(54) **Suit for the support of the body in respect of acceleration forces.**

---

(30) Priority : **27.06.88 GB 8815233**

(43) Date of publication of application :
**03.01.90 Bulletin 90/01**

(45) Publication of the grant of the patent :
**02.09.92 Bulletin 92/36**

(84) Designated Contracting States :
**DE FR IT**

(56) References cited :
**EP-A- 0 136 223**
**EP-A- 0 264 652**

(56) References cited :
**AIRCRAFT ENGINEERING. vol. 34, no. 406,
December 1962, LONDON GB page 379
"High-Altitude Pressure Suit"
MECHANICAL ENGINEERING. vol. 87, no. 11,
November 1965, NEW YORK US pages 49 - 53;
"space suit for the moon"**

(73) Proprietor : **Drägerwerk Aktiengesellschaft
Moislinger Allee 53-55
W-2400 Lübeck 1 (DE)**

(72) Inventor : **Reddemann, Hans, Dr. Ing.
Gartenstrasse 21
W-2400 Lübeck 1 (DE)**
Inventor : **von dem Hagen, Tronje, Dr. rer.nat.
Georg-Kerschensteiner-Strasse 7
W-2400 Lübeck 1 (DE)**
Inventor : **Huttenbach, Robin Christopher
Ground Floor Flat 68 Ridgway
London SW19 4RA (GB)**

EP 0 348 835 B1

## Description

The invention relates to a suit for the support of the human body in respect of acceleration forces, the suit including inflatable pressure bodies positioned adjacent the wearer's skin, the pressure bodies being distributed among different suit areas and filled with a medium which generates a pressure against portions of the outer surface of the wearer's body by means of a pressure supply unit.

Such suits are termed pressure suits or anti-g-suits and serve to compensate the loading of the body under acceleration forces, such as arise, for example, in the case of rapid changes in altitude in combat flying. By means of specific pressure exertion on the outer body surface, the blood vessel system of the body is placed under pressure. This prevents the blood volumes from dropping, under the effect of the acceleration forces, from the vital brain und upper body area into the lower extremities or arms. To this end, the suit is divided into partial areas which can be strapped around the corresponding places of the body, individually and independently, so that they lie close to said places. The individual areas are connected between themselves to a pressure means circulation which is supplied by a pressure supply unit by means of which the pressure required in each case can be generated in the circulation or even be reduced again. The individual areas of the suit can then either be connected to a common circulation or individual areas have their own independent pressure supply circulation.

Such a suit has been described in US-PS 2 495 316.

The known suits are used for flying personnel, above all for jet pilots, who are subject to increased acceleration forces during their employment, if, for example, they execute tight curvilinear flights. In order to prevent, for example, the blood plasma from flowing off into the lower extremities in the case of a curvilinear flight, an excess pressure is introduced into the sleeves around lower legs and upper thighs as well as, if necessary, into the arm region. As soon as the acceleration forces subside, the pressure in the respective partial areas is reduced again.

In addition to the body loading through acceleration forces, the pilots are, however, also subjected to intense influences of temperature through direct solarization into the cockpit, loading the circulation further, in addition. In order to eliminate this loading, suitable tempering suits are put on. They consist of flexible tubes which are arranged in a spiral or meander-shaped way and which are sewn into the woven fabric of the suit on the inside and must lie close to the body surface in order to guarantee tempering through heat conduction. In a coolant circulation consisting of a heat exchanger, a pump and a flexible tube system, a fluid working medium transports the heat away from the body or to the body (German Offenlegungsschrift 16 10 647).

If the loading of the body through acceleration forces, on the one hand, and temperature fluctuations, on the other hand, is to be prevented, it is necessary in the case of the conventional suit systems to put on two separate suits one upon the other. As a rule, the suit lying inside is then the heat protection suit and the outer suit is the anti-g-suit. The outer anti-g-suit can then only transmit the pressure effect to the body surface indirectly by way of the cooling suit. In the case of bad coordination of the pressure effect of the anti-g-suit in relation to the heat protection suit lying underneath, jamming or at least, however, constriction of cooling tubes can result. Moreover, the application of two separate suit systems is cumbersome for the mobility of the wearer and the plurality of supply connections and lines restrict this movement further. With a reversed order of suits, i.e. first the anti-g-suit and, lying on top, the heat protection suit, the protection against acceleration forces would, it is true, increase, yet the tempering efficiency of the heat protection suit would be reduced, as direct heat transmission is not possible.

A known water coolant suit according to MECHANICAL ENGINEERING, Vol 87 (1965) pages 49 - 53 provides for a liquid coolant which is guided through tubes covering the whole body surface, and after having collected heat it is recirculated via a heat-exchanger to ascertain cooling of the wearer's body. In combination therewith an additional air-containing suit which serves as a ventilating device covers the coolant suit.

Another known pressure suit (AIRCRAFT ENGINEERING, vol 34 (1962) page 379) is supplied with a gaseous pressurizing medium at a central part of the garment (i.e. the waist region) and then distributed to the extremities from where the gas bleeds off to the ambient. Again, this known suit uses a gaseous pressurizing medium which covers the whole body of the wearer. In order to cool the wearer's body one has to apply an additional coolant suit.

The underlying object of the present invention is to improve a suit of the type mentioned such that it does not hinder the heat exchange between the body and the cooling medium. At the same time the comfort of wear is to be improved when protection against acceleration forces and a tempering of the body are to be achieved.

In order to achieve the object it is provided that the pressure generating medium is additionally conveyed through a heat-exchanger to temper the medium at a body-cooling temperature and recirculated to the suit, at least part of the areas being interconnected with each other in terms of flow by way of link-type connection pieces whose flow cross-sections can be varied by means of constrictions.

The advantage achieved through the invention can essentially be seen in the fact that now both functions, namely the tempering and the protection of the body from acceleration forces which arise, are combined in a single suit and can be coordinated with each other in an ideal way. Two suits no longer need to be put on, one on top of the other, hindering the freedom of movement of the wearer of the suit, and the supply connections for the pressure generation and the flow of the heat exchange medium can be the same. Moreover, when using a fluid as a flowing medium and pressure-generating means, improved utilization of the pressure energy is possible as the fluid is less compressible than a gas.

Subdividing the whole suit into several areas, the body cooling agent can be conveyed through them, the connection pieces giving way to a flow through all areas, and, on the other hand, the areas can be separated from each other with regard to generating a pressure inside the volume by means of the constrictions: While the medium is able to flow through the connection pieces and through the constrictions with a relatively low flow rate at normal pressure in order to take up body heat of the wearer, pressure-generization will tend to cause an increasing flow of the medium, which is impeded by the constrictions. Thus, those areas which are positioned upstream the constrictions will be inflated first, and by choosing the appropriate charging level of the pressure supply unit these areas can be maintained at an elevated pressure level, whereas the other areas downstream the constrictions will keep their original pressure level, or their pressure level is increased only to an unperceivable extent. By variation of the flow cross-sections of the constrictions, one can choose the appropriate areas to be inflated by the pressure supply means. This can be achieved by providing the respective constrictions during manufacture according to customer's requirement, or the variation can be realized during use when activated by a control device.

In order to facilitate a pressure effect directed radially on the body, it is advantageous to equip the areas with a wall which, on the inner surface of the suit, consists, at least in part, of an elastic material and, on the outer surface of the suit, consists of an inelastic material. When generating a pressure in the individual areas an inflation or expansion of the individual areas or flexible tube lines does not then result, which inflation or expansion would lead to additional stiffening of the whole suit system. On the contrary, the pressure effect is directed at a restricted inner surface of the suit so that, otherwise, no significant cross-sectional change in the areas results.

The areas are as sleeves, are fixed in a coverall and are adjusted, when first put on, to the periphery of the respective body part. The suit is thus tailored to the physiognomic characteristics of the wearer of the suit. Several suit areas can be combined by way of the connection pieces in terms of flow so that a common connection to the conveying unit conveying the medium can be provided, or individual parts are connected with their connection pieces separately to the conveying unit and directed by way of the heat exchanger.

For the purpose of directed through-flow of the medium through the sleeves, the latter are provided with ducts, which are connected one with another by way of through-passages, into which the connection pieces open.

Located in the connection pieces themselves there can be constrictions, by means of which the flow cross-sections of the connection pieces can be varied. The sequence in through-flow direction, in which the partial areas, in the case of pressure generation, can be placed, stepwise, under excess pressure, can thus be determined. According to the requirement, it can also be desirable to exclude a certain partial area from the pressure generation by completely closing the corresponding constriction. The constrictions can also be activated by a control device which opens or closes the constrictions in a manner dependent upon pressure, in a preselectable way. As a result the suit can, for example, either be used purely as a pressure suit, if the constrictions arranged last in terms of flow are closed and the others are open, or as a pressure-heat-suit if all the constrictions are fully open.

An exemplary embodiment of the invention is represented with the aid of the schematic drawing and is explained in greater detail in the following.

Figure 1 shows a suit with its partial areas.

Figures 2, 3, 4, 5 show the sections through various partial areas of the suit.

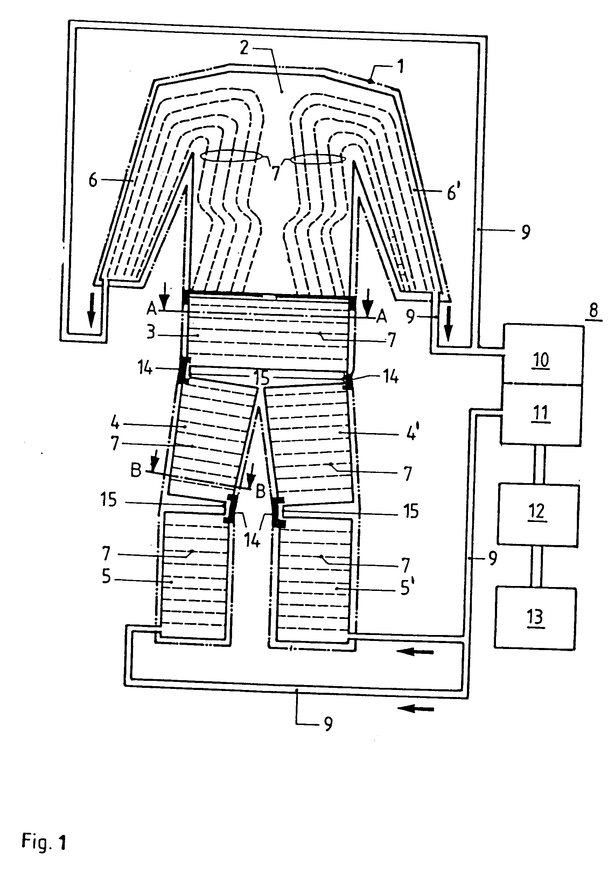

In Figure 1 there is represented a suit (1) which is tailored in the form of a coverall, from a flexible, non-expandable woven fabric. The suit (1) is divided into several partial areas, of which the largest is the upper body area (2) to which there connects the abdominal area (3), the upper thigh areas (4, 4') and the lower leg areas (5, 5'). The arm area (6, 6') forms with the upper body area (2) a unit. Each of the partial areas has a network of ducts (7) running through it, which network, in the arm area (6, 6') at the level of the sleeve openings and in the lower leg area (5, 5') at the level of the feet openings, is connected to a supply unit (8) by way of supply lines (9). The supply unit (8) contains a conveying unit (10) and a heat exchanger (11), connected to a pressure supply unit (12) generating the medium-pressure and to a media supply (13). Each of the partial areas (2, 3, 4, 4', 5, 5', 6, 6') is connected with the other by way of connection pieces (14) in which constrictions (15) are incorporated. The ducts (7), drawn in broken lines, are each connected one after the other according to area, in terms of flow, and are united in the individual area in the connection piece (14). The preferred direction of flow is entry of the medium at the lower legs (5, 5′) and exit in the arm area (6, 6′).

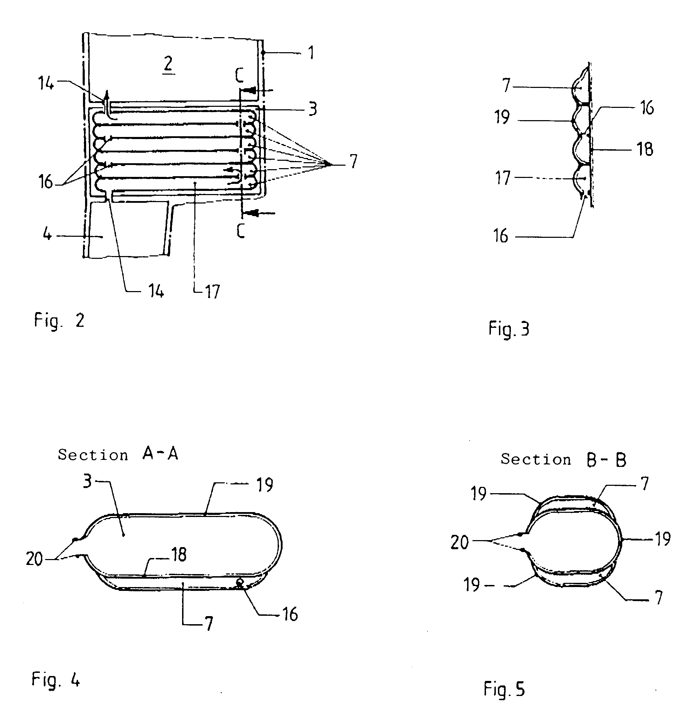

A diagrammatic inner view for the abdominal area (3) is represented in Figure 2. The individual ducts (7) are connected with each other by way of the through-passages (16) and start at the connection piece (14) of the upper thigh area (4) and end at the further connection piece (14) leading to the upper body area (2). The flow direction of the medium (17), which transmits the pressure and the heat, is represented by means of flow arrows.

The section C-C represented in Figure 3 shows the bead-shaped development of the ducts (7) filled with the medium (17). The inside of the suit (1) is equipped at this point with an expandable and flexible covering (18) furthering the heat transmission. The surface of the suit pointing to the environment is equipped with a flexible, non-expandable and pressure-proof woven fabric layer (19).

The section A-A represented in Figure 4 shows the sleeve-shaped abdominal area (3) which can be stretched by way of a sleeve seal (20) around the abdomen of the wearer of the suit. The outer pressure-proof woven fabric layer (19) surrounds the total sleeve (3). The pressure-compliant elastic covering (18) is located merely on the inner surface of the suit (1) facing the stomach area of the wearer of the suit. This area is also only provided with the ducts (7), as a pressure effect on the inflexible back area of the wearer of the suit is ineffective. Nevertheless, the whole back area also has ducts (7) running through it in order to guarantee a heat exchange.

In Figure 5 the section B-B shows an upper thigh sleeve about the partial area (4). Here front and rear side of the sleeve are provided with ducts (7). The side of the sleeve facing the body part is provided with the pressure-compliant covering (18) and the outer cover is represented by means of the pressure-proof woven fabric layer (19).

## Claims

1. Suit (1) for the support of the human body in respect of acceleration forces, the suit including inflatable pressure bodies positioned adjacent the wearer's skin, the pressure bodie being distributed among different suit areas (2, 3, 4, 4′, 5, 5′, 6, 6′) and filled with a medium which generates a pressure against portions of the outer surface of the wearer's body by means of a pressure supply unit (12), characterized in that the pressure generating medium is additionally conveyed through a heat-exchanger (11) to temper the medium at a body-cooling temperature and recirculated to the suit (1), at least part of the areas (2, 3, 4, 4′, 5, 5′, 6, 6′) being interconnected with each other in terms of flow by way of link-type connection pieces (14), whose flow cross-sections can be varied by means of constrictions (15).

2. Suit according to claim 1, characterized in that a first series of areas covers the upper body area (2) and a second series of areas covers the abdomen (3), the upper thigh areas (4, 4′) and the lower leg areas (5, 5′), and that the constrictions (15) are incorporated into those connection pieces (14) which link the first series of areas (2) with the second series of areas (3, 4, 4′, 5, 5′).

3. Suit according to claim 1 or 2, characterized in that the areas (2, 3, 4, 4′, 5, 5′, 6, 6′) have a wall which, on the inner surface of the suit, consists, at least in part, of an elastic, pressure-compliant covering (18) and, on the outer surface of the suit, consists of an inelastic pressure-proof woven fabric layer (19).

4. Suit according to one of the claims 1 to 3, characterized in that the areas (2, 3, 4, 4′, 5, 5′, 6, 6′) can be wrapped around the parts of the body to be supported in a sleeve-like manner and can be connected with each other by way of the connection pieces (14).

5. Suit according to one of the claims 1 to 4, characterized in that for the purposes of directed through-flow of the medium (17) the areas (2, 3, 4, 4′, 5, 5′, 6, 6′) are provided with ducts (7) which are connected one with another by way of through-passages (16) and open into the connection pieces (14).

## Patentansprüche

1. Anzug (1) zur Stützung des menschlichen Körpers gegenüber Beschleunigungskräften, wobei der Anzug (1) aufblähbare Druckkörper enthält, die an der Haut des Trägers anliegen und die auf verschiedene Anzugsbereiche (2, 3, 4, 4′, 5, 5′, 6, 6′) verteilt und mit einem Medium gefüllt sind, welches mit Hilfe einer Druckversorgungseinheit (12) einen Druck auf Teilbereiche der äußeren Oberfläche des Körpers des Trägers erzeugt, dadurch gekennzeichnet, daß das druckerzeugende Medium zusätzlich durch einen Wärmetauscher (11) gefördert, um das Medium auf eine Körperkühltemperatur zu temperieren, und zum Anzug (1) zurückgeführt wird, und daß die Bereiche (2, 3, 4, 4′, 5, 5′, 6, 6′) zumindest teilweise strömungsmäßig untereinander verbunden sind mit Hilfe von verbindungsartigen Anschluß-

tücken (14), deren Strömungsquerschnitt durch Drosselstellen (15) variierbar ist.

2. Anzug nach Anspruch 1, dadurch gekennzeichnet, daß eine erste Reihe von Anzugsbereichen den Oberkörperbereich (2), und eine zweite Reihe von Anzugsbereichen den Unterleibsbereich (3), die Oberschenkelbereiche (4, 4') und die Unterschenkelbereiche (5, 5') bedeckt, und daß die Drosselstellen (15) in diejenigen Anschlußstücke (14) eingearbeitet sind, die die erste Reihe von Anzugsbereichen (2) mit der zweiten Reihe von Anzugsbereichen (3, 4, 4', 5, 5') verbinden.

3. Anzug nach Anspruch 1 oder 2, dadurch gekennzeichnet, daß die Anzugsbereiche (2, 3, 4, 4', 5, 5', 6, 6') eine Wandung besitzen, die an der Anzugsinnenfläche zumindest teilweise aus einem elastischen, drucknachgiebigen Belag (18), und an der Anzugsaußenfläche aus einer unelastischen, druckfesten Gewebeschicht (19) besteht.

4. Anzug nach einem der Ansprüche 1 bis 3, dadurch gekennzeichnet, daß die Bereiche (2, 3, 4, 4', 5, 5', 6, 6') manschettenartig um die zu unterstützenden Körperteile umschlingbar und miteinander strömungsmäßig über Anschlußstücke (14) verbindbar sind.

5. Anzug nach einem der Ansprüche 1 bis 4, dadurch gekennzeichnet, daß zum gerichteten Durchfluß des Mediums (17) die Bereiche (2, 3, 4, 4', 5, 5', 6, 6') mit Leitungskanälen (7) versehen sind, die untereinander über Durchtritte (16) verbunden sind und in die Anschlußstücke (14) münden.

**Revendications**

1. Vêtement (1) de protection contre les accélérations, ce vêtement comprenant des éléments pressurisés gonflables placés contre la peau de la personne qui le porte, les éléments pressurisés étant répartis en différentes zones de vêtement (2, 3, 4, 4', 5, 5', 6, 6') et remplis d'un agent qui génère une pression contre des parties de la surface extérieure du corps humain au moyen d'un dispositif d'alimentation en pression (12), caractérisé en ce que l'agent générateur de pression est, en outre, véhiculé à travers un échangeur de chaleur (11) pour tempérer l'agent à une température de refroidissement du corps et en ce que sa recirculation jusqu'au vêtement (1) est assurée, au moins une partie des zones (2, 3, 4, 4', 5, 5', 6, 6') étant reliées les unes aux autres, en termes d'écoulement, au moyen d'organes formant raccords de type articulation (14), dont on peut faire varier les sections de passage au moyen d'étranglements (15).

2. Vêtement selon la revendication 1, caractérisé en ce qu'une première série de zones recouvre la zone correspondant à la partie supérieure du corps (2) et une deuxième série de zone recouvre l'abdomen (3), les zones correspondant aux parties supérieures des jambes (4, 4') et les zones correspondant aux parties inférieures des jambes (5, 5'), et en ce que les étranglements (15) sont incorporés dans ces organes formant raccords (14) qui relient la première série de zones (2) à la deuxième série de zones (3, 4, 4', 5, 5').

3. Vêtement selon la revendication 1 ou 2, caractérisé en ce que les zones (2, 3, 4, 4', 5, 5', 6, 6') comportent une paroi qui, sur la surface intérieure du vêtement, se compose, au moins en partie, d'un revêtement élastique et résistant à la pression (18) et, sur la surface extérieure du vêtement, se compose d'une couche de tissu résistant à la pression et non élastique (19).

4. Vêtement, selon l'une quelconque des revendications 1 à 3, caractérisé en ce que les zones (2, 3, 4, 4', 5, 5', 6, 6') peuvent être attachées autour des parties du corps à protéger à la manière d'un manchon et peuvent être raccordées les unes aux autres au moyen d'organes formant raccords (14).

5. Vêtement selon l'une quelconque des revendications 1 à 4, caractérisé en ce que pour permettre l'écoulement de l'agent (17) dans un sens , les zones (2, 3, 4, 4', 5, 5', 6, 6') sont pourvues de canalisations (7) qui sont reliées les unes aux autres au moyen de passages traversants (16) et aboutissent dans les organes formants raccords (14).

Fig. 1

Fig. 2

Fig. 3

Section A-A

Fig. 4

Section B-B

Fig. 5